# EUROPEAN PATENT APPLICATION

(11) **EP 3 450 124 A1**
(43) Date of publication of application: **06.03.2019**
(21) Application number: 18200407.7
(22) Date of filing: 23.12.2013
(51) Int. Cl.: B27K 3/34, A01N 25/24, A01N 25/04, C09D 5/14, C09D 5/18, C09K 21/00

(54) **METHOD OF TREATING A WOOD OBJECT**

(30) Priority: 21.12.2012 FI 20126375
(62) Divisional of application: 13864216.0
(71) Applicant: Metsäliitto Osuuskunta, 02100 Espoo (FI)
(72) Inventor: HEIKKONEN, Samuli, 44201 Suolahti (FI); SOKKA, Kasperi, 44201 Suolahti (FI)
(74) Representative: Seppo Laine Oy

(57) **Abstract**

A method of treating a wood object against unwanted effects caused by fire or, correspondingly, micro-organisms or insects. The wood object is treated with a mixture which comprises at least one active substance, which active substance or active substances are mixed into a liquid intermediate substance before use. A liquid dispersion of an agent that increases the hydrophobicity of wood, such as an aqueous dispersion of alkyl ketene dimer or alkenyl diketene dimer, is added into this mixture. By treating the wood object with a mixture that is generated in this way, the active substance will remain in the wood, and it is possible to prevent or significantly delay rainwater flushing it out.

## Description

The present invention relates to a method of protecting a wood object against external threats such as unwanted effects caused by fire and micro-organisms or insects.

The present invention also relates to a liquid mixture which is usable in the present method.

The present invention also relates to the use of an agent which increases the hydrophobicity of wood with the purpose of preventing the flushing out of wood preservatives and, correspondingly, fire retardants, from the wood.

It is already known how to protect wood against mould, blue staining and insects by means of various commercial wood preservatives which comprise biocides, such as IPBC (3-iodo-2-propynyl butyl carbamate), propiconazole, tebuconazole or cypermethrin. In addition, there are known non-biocidal protective substances which prevent detrimental biological effects, such as tall oil and its derivatives, or tall oil pitch and derivatives and processed products of it.

It is also known how to improve the fire resistance of wood by way of various fire retardants, such as salts of formic acid, citric acid, phosphoric acid, phosphonic acid or boric acid.

However, it is a problem that known wood preservatives do not prevent or significantly delay the absorption of rainwater into the wood. Rainwater is known to flush mould retardants and other wood preservatives out of the wood. Splash/rainwater has been found significantly to reduce the efficiency of commercial protective materials based on, for example, IPBC and propiconazole.

Fire retardants are generally soluble in water and a widely known problem is that they are flushed out during building work, particularly when it is raining.

It is also known how to use agents which make the wood surface hydrophobic (for example AKD, wood oils, waxes). Known hydrophobing agents make the surface of the wood hydrophobic, but do not significantly protect the wood from mould.

Existing solutions separately protect wood against detrimental biological effects, such as mould, blue staining and insects.

Published Patent Application WO 2009/004 110 and US 2012/156517 describe an aqueous solution of formate and alkyl ketene dimer (AKD), which solution is designed for the treatment of wood.

US 2009/304939 describes a method of protecting wood, in which method an aqueous dispersion of AKD is applied onto wet wood.

US 2010/297460, in turn, describes a composition which is suitable for wood treatment, in which composition monocarboxylic acid and a chelating agent are dissolved in a water-based carrier. Furthermore, hydrophobing agents, such as AKD, and organic biocides, too, can be added to the composition.

It is a purpose of the present invention to provide an improved method for the protection of a wood object against external threats, such as unwanted effects caused by fire and micro-organisms or insects.

In particular, it is a purpose to provide a method according to which the active substances, that is wood preservatives, such as biocides, as well as fire retardants remain fast in the wood after the treatment and are not flushed out of the wood, for example by the impact of rainwater during building work.

The method according to the present invention is based on the surprising finding that by adding into a wood preservative product or into a fire retardant product a liquid dispersion of an agent that increases the hydrophobicity of wood, in particular an aqueous dispersion of AKD, that is alkenyl diketene dimer, and by treating the wood object with the resulting mixture, the active substance will remain in the wood and it is possible to prevent or significantly delay rainwater flushing it out.

This surprising effect may result from the fact that the AKD or a similar substance identifies the hydroxyl groups in the wood and binds to the wood by way of them. It is therefore probable that the AKD or a similar substance is also capable of binding the other active substances, including water-soluble substances, to the wood to prevent them from being easily flushed out. However, this is only one possible explanation, and the scope of protection of the present invention is not limited in any way to this explanation.

Thus, the present invention relates to a method of protecting a wood object against external threats, which threats are unwanted effects caused by fire and, correspondingly, micro-organisms or insects, according to the characterizing part of Claim 1.

The present invention also relates to a liquid mixture which is intended for use, in the method according to the present invention, for treatment of a wood object, according to the characterizing part of Claim 9.

The present invention also relates to the use of a liquid dispersion of an agent that increases the hydrophobicity of wood with the purpose of preventing or delaying the flushing out of the active substances in the wood preservative or the fire retardant product from the wood, according to Claim 12.

Considerable advantages are achieved with the present invention. Thus, the impact of rainwater during building work, transportation and storage does not significantly decrease the functionality of the active substances, such as the wood preservatives or the fire retardants, because the hydrophobing agent prevents the protective substance from being flushed out, or at least significantly delays the action. The ability to protect against biological threats (mould, blue stain, termite) can be maintained despite rain during the building work stage. In this way, the wooden parts of the building are protected long-term against biological and other threats.

Several organic biocides are only slightly soluble in water. Examples are: the solubility in water of IPBC is 0.0156 % by weight, of propiconazole 0.01 % by weight, and of tebuconazole 0.0032 % by weight. Therefore, directly dissolved in water, they do not generate the needed concentration in the product to achieve the desired effect. By contrast, the present solution makes it possible to prepare an emulsion or a dispersion which is stable in water.

In the following, the new technology will be examined in more detail with the aid of a few embodiments and a detailed description.
Figure 1 shows a graph of the wood moisture during a sprinkler test in a laboratory.
Figure 2 shows a mould test after a period of 24 days. To the left, 4 test pieces show the effects of a treatment using a combination of wood preservative and AKD, and to the right are 4 untreated references.
Figure 3 shows a blue stain test after a period of 24 days. To the left, 4 test pieces show the effects of a treatment using a combination of wood preservative and AKD, and to the right are 4 untreated references.

In the present invention, the term "active substance" means a substance that acts to protect against the unwanted effects of fire (fire retardant) and/or micro-organisms or insects (wood preservative).

As described above, in the present technology, a wood object is treated with a mixture that comprises at least one active substance, which active substance acts to protect against the unwanted effects of fire and/or micro-organisms or insects, in which case the active substance or the active substances are mixed into a liquid intermediate substance before use.

The mixture, which is intended for treatment of the wood object, is prepared of two separate mixtures which are mixed with each other, that is, a liquid dispersion of an agent that increases the hydrophobicity of wood is added to the liquid mixture of the active substance or the active substances.

A liquid dispersion of an agent that increases the hydrophobicity of wood is added into the liquid mixture of the active substance or the active substances. Typically, a mixture such as this comprises an agent that increases the hydrophobicity 1-20 % by weight, wood preservative 0.1-5 % by weight and/or fire retardant 5-60 % by weight.

The active substance acts to protects against the unwanted effects of fire and/or micro-organisms or insects, in which case the active substance or the active substances are mixed into a liquid intermediate substance, in order to generate a protective product.

The wood preservative can be an organic or inorganic biocide which is known per se, or a similar substance that has a wood-protecting effect, or a mixture of two or more biocides or protective substances.

Examples of biocides are IPBC (3-iodo-2-propynyl butyl carbamate), propiconazole, tebuconazole or cypermethrin and mixtures thereof. Alternatively, the wood preservative can be a non-biocide, such as tall oil and its derivatives, or tall oil pitch and processed products and derivatives of it.

The fire retardant is typically a salt of an acid. Examples are salts of formic acid, citric acid, phosphoric acid, phosphonic acid or boric acid.

One or more wood preservatives (wood protection product) or one or more fire retardants (fire protection product) are included in the product that comprises the active substance or the active substances. The product may also comprise both wood preservatives and fire retardants.

The active substance or the active substances in the product are mixed into a liquid intermediate substance. The intermediate substance chosen depends, for example, on the solubility properties of the active substance. The above-mentioned fire retardants are very soluble in water, therefore the liquid intermediate substance may be water. The above-mentioned biocides are generally quite sparingly water soluble, thus dissolving them directly into water typically fails to generate a percentage of biocide in the product sufficient to produce the desired effect. In this case, it is possible, for example, to dissolve the biocides in such a suitable organic solvent into which they can be dissolved.

If needed, an organic phase can be mixed into the water to achieve a stable mixture. Dispersions and emulsions are examples.

In the present technology, it is noteworthy that a liquid dispersion of the agent that increases the hydrophobicity of wood is added into the liquid mixture of the active substance or the active substances (for example a commercial product).

The agent that increases the hydrophobicity may be a synthetic or a natural substance, such as monomeric molecules, dimers, oligomers and polymers, such as alkyl ketene dimer, i.e. AKD, resin adhesive, other wax, paraffin or an oily substance, or another agent that increases the hydrophobicity. In addition, the substance may be, for example, a non-organic hydrophobing agent, such as nanoclay or nanosilica. A commercial example is Surfapore W (nanoclay).

More preferable examples of agents that increase the hydrophobicity of wood are AKD (alkyl ketene dimer) and, correspondingly, unsaturated compounds (for example alkenyl diketene dimer), wood oil or wax. In the following, the abbreviation AKD is used for both alkyl ketene dimer products and alkenyl diketene dimer products. Of these, the saturated substances possess better hydrophobing properties, and thus they are more preferable.

A composite mixture typically comprises wood preservative 0.1-5 % by weight and/or fire retardant 5-60 % by weight, and an agent that increases the hydrophobicity 1-20 % by weight.

The generated liquid mixture (in the following also "composite mixture") is important. By treating the wood with this mixture, a sufficient amount of active substance penetrates into the wood. Above all, the active substance remains in the wood, and it is possible to prevent or significantly delay rainwater flushing it out.

Preferably, the composite mixture comprises IPBC approximately 0.6-0.8 % by weight, propiconazole approximately 0.2-0.3 % by weight, and AKD approximately 1.5-2.5 % by weight, suitably AKD approximately 2 % by weight. The mixture may also comprise fire retardants.

The composite mixture described above can be applied onto the surface of a wood object by painting, spraying, brushing or rolling, or by combinations of these methods. Alternatively, it is possible to immerse the wood object into the abovementioned mixture or to pressure impregnate it with this mixture.

The wood object to be treated may be shaped, for example, as a board or a beam. The wood object may be a single piece (homogeneous throughout) or the wood object may be a combination of several different kinds of layers.

The wood object may be, for example, a wood board or a wood beam, wood veneer, fibre board, chipboard, lumber, glue-laminated wood, plywood, LVL (laminated veneer lumber) board or beam, or OSB (oriented strand board).

The following non-restrictive example illustrates one embodiment.

### Example: Protection of a wood surface against mould by adding a hydrophobing ingredient as an additive to a commercial wood preservative

An AKD-based hydrophobing agent is added as an additive to a commercial wood preservative (TEKNOL AQUA), which comprises IPBC (0.3 % by weight) and propiconazole (0.9 % by weight). A 15 % aqueous dispersion of AKD is added to the wood preservative at a ratio of 1:6, in which case the ready mixture comprises AKD approximately 2 % by weight. This composite mixture is applied onto the surface of a spruce plywood on an industrial surface treatment line.

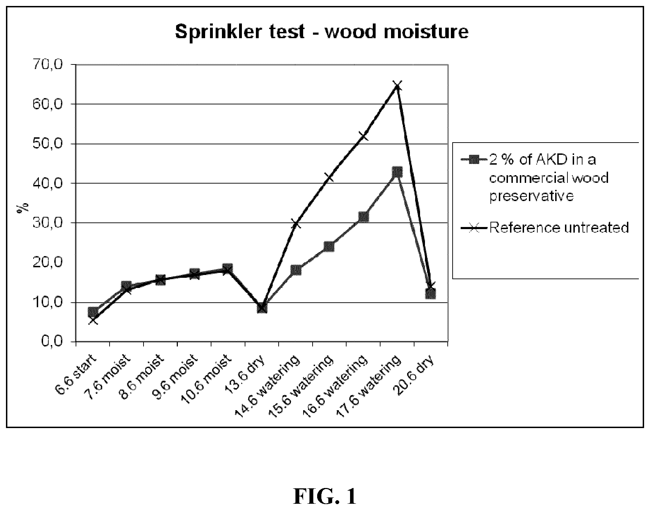

In addition, conditions tests which simulate how rain affects the moisture of the wood have been carried with the above-described spruce plywood that is treated with the wood preservative and the aqueous dispersion of AKD. The surface-treated and dried pieces of wood were placed in a water bath at room temperature to simulate how rain affects the moisture of the wood. Figure 1 clearly shows that the aqueous dispersion of AKD and the wood preservative protect the wood against splash water.

Mould tests in laboratory conditions have also been carried out on the above-described spruce plywood which is treated with an aqueous dispersion of wood preservative and AKD.

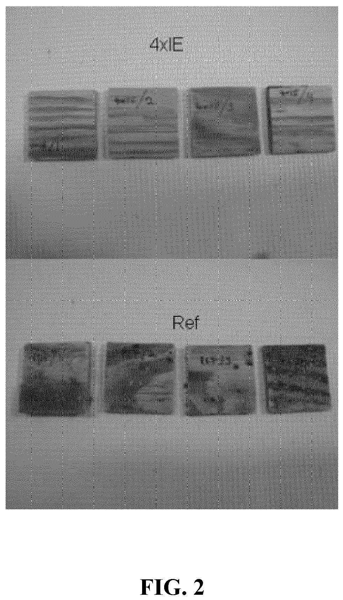

During the test, the pieces treated with this dispersion showed no mould growth at all during a test period of three weeks. The untreated reference pieces, on the other hand, began to exhibit mould after four days and by the end of the test, after a period of 24 days, 50 % of the surfaces of the pieces showed evidence of mould (Figure 2).

Also, blue stain tests in laboratory conditions were carried out for the spruce plywood which is treated with the above-described aqueous dispersion of wood preservative and AKD.

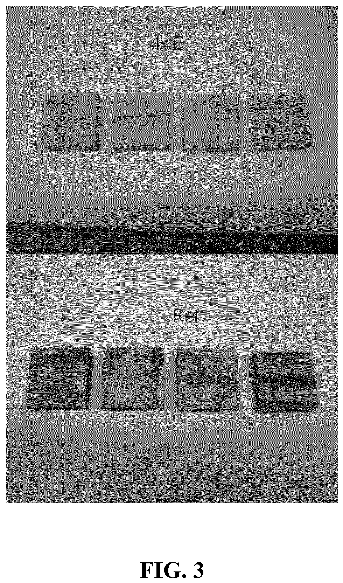

During the three-week test, spore growth and blue staining did not occur at all in the pieces which were treated with this dispersion. Untreated reference pieces, on the other hand, started to blue stain after four days, and by the end of the test, after a period of 24 days, 100 % of the surfaces of the pieces were covered with spore growth and 50 % were blue stained (Figure 3).

The present invention is not intended to be limited to the above embodiments, which are only examples. The present invention is intended to be widely applied within the scope of protection of the following claims.

The following embodiments are disclosed:
1. A method of protecting a wood object against external threats, which threats are the unwanted effects caused by fire and, correspondingly, micro-organisms or insects, according to which method
   - the wood object is treated with a mixture which comprises at least one active substance, which active substance acts to protect against the unwanted effects of fire and/or micro-organisms or insects, in which case the active substance or the active substances are mixed into a liquid intermediate substance, before use,
   **characterized in that**
   - a liquid dispersion of an agent that increases the hydrophobicity of wood is added into the liquid mixture of the active substance or the active substances.
2. The method according to embodiment 1, **characterized in that** the agent which increases the hydrophobicity is dispersed in water in order to generate an aqueous dispersion, and the aqueous dispersion is mixed into a liquid intermediate substance that comprises wood preservative or fire retardant or both.
3. A method according to embodiment 1 or 2, **characterized in that** the wood preservative is a biocide or a non-biocide.
4. A method according to embodiment 1, 2 or 3, **characterized in that** the biocide is IPBC (3-iodo-2-propynyl butyl carbamate), propiconazole, tebuconazole or cypermethrin, and the non-biocide is tall oil, its derivatives, tall oil pitch or processed products or derivatives of it.
5. A method according to any of embodiments 1-4, **characterized in that** the fire retardant is a salt of formic acid, citric acid, phosphoric acid, phosphonic acid or boric acid.
3. A method according to any of the preceding claims, **characterized in that** the agent that increases the hydrophobicity of wood is AKD (alkyl ketene dimer or alkenyl diketene dimer), wood oil or wax.
7. A method according to any of the preceding embodiments, **characterized in that** the wood object is treated with a liquid mixture which comprises wood preservative 0.1-5 % by weight and/or fire retardant 5-60 % by weight, and an agent that increases the hydrophobicity 1-20 % by weight.
8. The method according to embodiment 7, **characterized in that** the mixture comprises IPBC approximately 0.6-0.8 % by weight, propiconazole approximately 0.2-0.3 % by weight and AKD 1.5-2.5 % by weight, preferably AKD approximately 2 % by weight.
9. A method according to any of the preceding embodiments, **characterized in that** the treatment is carried out by painting or by spraying or by immersion treatment.
10. A method according to any of the preceding embodiments, **characterized in that** the shape of the wood object is, for example, a board or a beam, and that the wood object is a single piece, or that the wood object is a combination of several layers.
11. A method according to any of the preceding embodiments, **characterized in that** the wood object is a single-piece wood board or wood beam, wood veneer, fibre board, chipboard, lumber, glue-laminated wood, plywood, LVL (laminated veneer lumber) board or beam, or OSB (oriented strand board).
12. A wood object, **characterized in that** it has been treated with a method according to any of embodiments 1-11.
13. The wood object according to embodiment 12, **characterized in that** it has been treated with a liquid mixture which comprises an agent that increases the hydrophobicity, a wood preservative and/or a fire retardant.
14. A wood object according to embodiments 12 or 13, **characterized in that**
   - the wood preservative is a biocide or a non-biocide,
   - the fire retardant is a salt of formic acid, citric acid, phosphoric acid, phosphonic acid or boric acid, and
   - the agent that increases the hydrophobicity of wood is AKD (alkyl ketene dimer), wood oil or wax.
15. The wood object according to embodiment 14, **characterized in that** the biocide is IPBC (3-iodo-2-propynyl butyl carbamate), propiconazole, tebuconazole or cypermethrin and the non-biocide is tall oil, its derivatives, tall oil pitch, processed products or derivatives of it.
16. A wood object according to any of embodiments 12-15, **characterized in that** it has been treated with a liquid mixture which comprises wood preservative 0.1-5 % by weight and/or fire retardant 5-60 % by weight, and an agent that increases the hydrophobicity 1-20 % by weight.
17. The wood object according to embodiment 16, **characterized in that** it has been treated with a liquid mixture which comprises IPBC approximately 0.6-0.8 % by weight, propiconazole approximately 0.2-0.3 % by weight, and AKD 1.5-2.5 % by weight, preferably AKD approximately 2 % by weight.
18. A wood object according to any of embodiments 12-17, **characterized in that** onto the surface of the wood object a liquid mixture has been applied, which mixture comprises wood preservative and/or fire retardant and an agent that increases the hydrophobicity, by painting, spraying, pouring, brushing, or a combination of these methods, or by immersing the wood object into the mixture or by pressure impregnating it with the mixture.
19. A wood object according to any of embodiments 12-18, **characterized in that** it is in the shape of, for example, a board or beam, and the wood object is a single piece, or the wood object is a combination of several layers.
20. A wood object according to any of embodiments 12-19, **characterized in that** it is a single-piece wood board or wood beam, wood veneer, fibre board, chipboard, lumber, glue-laminated wood, plywood, LVL (laminated veneer lumber) board or beam, or OSB (oriented strand board).
21. A liquid mixture which is intended to be used for treatment of a wood object, in a method according to any of embodiments 1-11, **characterized in that** the mixture comprises an agent that increases the hydrophobicity 1-5 % by weight, wood preservative 0.1-5 % by weight and/or fire retardant 5-60 % by weight.
22. The mixture according to embodiment 21, **characterized in that** the wood preservative is a biocide or that the wood preservative is a non-biocide,
   - the fire retardant is a salt of formic acid, citric acid, phosphoric acid, phosphonic acid or boric acid, and
   - the agent that increases the hydrophobicity of wood is AKD (alkyl ketene dimer), wood oil or wax.
23. The method according to embodiment 22, **characterized in that** the biocide is IPBC (3-iodo-2-propynyl butyl carbamate), propiconazole, tebuconazole or cypermethrin, and that the non-biocide is tall oil, its derivatives, tall oil pitch, processed products or derivatives of it.
24. A mixture according to Claim 21, 22 or 23, **characterized in that** it comprises IPBC approximately 0.6-0.8 % by weight, propiconazole approximately 0.2-0.3 % by weight and AKD 1.5-2.5 % by weight, preferably AKD approximately 2 % by weight.
25. Use of a liquid dispersion of an agent that increases the hydrophobicity of wood for preventing the flushing-out from the wood of active substances contained in a wood preservative or fire retardant product, the active substance exhibiting an effect that protects against unwanted effects of fire and/or micro-organisms or insects, the active substance or active substances having been mixed into a liquid intermediate substance to generate a protective product, **characterized in that** the liquid dispersion of an agent that increases the hydrophobicity of wood is mixed into a protective product, and that the wood object is treated with the obtained mixture.
26. Use according to embodiment 25, **characterized in that** the agent that increases the hydrophobicity of wood is AKD (alkyl or alkenyl ketene dimer), wood oil or wax.
27. Use according to embodiments 25 or 26, **characterized in that** the liquid dispersion of the agent that increases the hydrophobicity of wood is an aqueous dispersion of AKD (alkyl ketene dimer).
28. Use according to any of embodiments 25-27, **characterized in that** the active substance is a wood preservative which is a biocide, or that the wood preservative is a non-biocide.
29. Use according to embodiment 28, **characterized in that** the biocide is IPBC (3-iodo-2-propynyl butyl carbamate), propiconazole, tebuconazole or cypermethrin, and that the non-biocide is tall oil, its derivatives, tall oil pitch, processed products or derivatives of it.
30. Use according to any of embodiments 25-29, **characterized in that** the active substance is a fire retardant, which is a salt of formic acid, citric acid, phosphoric acid, phosphonic acid or boric acid.
31. Use according to any of embodiments 25-30, **characterized in that** the aqueous dispersion of AKD is mixed into the protective product at such a mixture ratio that the AKD content of the obtained mixture is 1-3 % by weight, preferably 1.5-2.5 % by weight, more preferably approximately 2 % by weight.

### Citations

WO 2009/004 110
US 2012/156517
US 2009/304939
US 2010/297460

## Claims

1. A method of protecting a wood object against external threats, which threats are the unwanted effects caused by fire and, correspondingly, micro-organisms or insects, according to which method
- the wood object is treated with a mixture which comprises at least one active substance, which active substance acts to protect against the unwanted effects of fire and/or micro-organisms or insects, in which case the active substance or the active substances are mixed into a liquid intermediate substance, before use,
**characterized in that**
- a liquid dispersion of an agent that increases the hydrophobicity of wood is added into the liquid mixture of the active substance or the active substances, wherein the agent which increases the hydrophobicity is dispersed in water in order to generate an aqueous dispersion, and the aqueous dispersion is mixed into a liquid intermediate substance that comprises wood preservative or fire retardant or both, and
- the agent that increases the hydrophobicity of wood is AKD (alkyl ketene dimer or alkenyl diketene dimer).

2. A method according to Claim 1, **characterized in that** the wood preservative is a biocide or a non-biocide.

3. A method according to Claim 1 or 2, **characterized in that** the biocide is IPBC (3-iodo-2-propynyl butyl carbamate), propiconazole, tebuconazole or cypermethrin, and the non-biocide is tall oil or tall oil pitch.

4. A method according to any of Claims 1-3, **characterized in that** the fire retardant is a salt of formic acid, citric acid, phosphoric acid, phosphonic acid or boric acid.

5. A method according to any of the preceding claims, **characterized in that** the wood object is treated with a liquid mixture which comprises wood preservative 0.1-5 % by weight and/or fire retardant 5-60 % by weight, and an agent that increases the hydrophobicity 1-20 % by weight.

6. The method according to Claim 5, **characterized in that** the mixture comprises IPBC approximately 0.6-0.8 % by weight, propiconazole approximately 0.2-0.3 % by weight and AKD 1.5-2.5 % by weight, preferably AKD approximately 2 % by weight.

7. A method according to any of the preceding claims, **characterized in that** the treatment is carried out by painting or by spraying or by immersion treatment.

8. A method according to any of the preceding claims, **characterized in that** the shape of the wood object is, for example, a board or a beam, and that the wood object is a single piece, or that the wood object is a combination of several layers, in particular the wood object is a single-piece wood board or wood beam, wood veneer, fibre board, chipboard, lumber, glue-laminated wood, plywood, LVL (laminated veneer lumber) board or beam, or OSB (oriented strand board).

9. A liquid mixture which is intended to be used for treatment of a wood object, in a method according to any of Claims 1-8, **characterized in that** the mixture comprises an agent that increases the hydrophobicity 1-5 % by weight, wood preservative 0.1-5 % by weight and/or fire retardant 5-60 % by weight, wherein the agent that increases the hydrophobicity is AKD (alkyl ketene dimer or alkenyl diketene dimer).

10. The mixture according to Claim 9, **characterized in that**
the wood preservative is a biocide or that the wood preservative is a non-biocide,
- the fire retardant is a salt of formic acid, citric acid, phosphoric acid, phosphonic acid or boric acid, and
- the agent that increases the hydrophobicity of wood is AKD (alkyl ketene dimer).

11. The mixture according to Claim 10, **characterized in that** the biocide is IPBC (3-iodo-2-propynyl butyl carbamate), propiconazole, tebuconazole or cypermethrin, and that the non-biocide is tall oil or tall oil pitch, in particular the mixture comprises IPBC approximately 0.6-0.8 % by weight, propiconazole approximately 0.2-0.3 % by weight and AKD 1.5-2.5 % by weight, preferably AKD approximately 2 % by weight.

12. Use of a liquid dispersion of an agent that increases the hydrophobicity of wood for preventing the flushing-out from the wood of active substances contained in a wood preservative or fire retardant product, the active substance exhibiting an effect that protects against unwanted effects of fire and/or micro-organisms or insects, the active substance or active substances having been mixed into a liquid intermediate substance to generate a protective product, **characterized in that** the liquid dispersion of an agent that increases the hydrophobicity of wood is mixed into a protective product, and that the wood object is treated with the obtained mixture and wherein the agent that increases the hydrophobicity of wood is AKD (alkyl or alkenyl ketene dimer) and the liquid dispersion of the agent that increases the hydrophobicity of wood is an aqueous dispersion of AKD.

13. Use according to Claim 12, **characterized in that** the active substance is a wood preservative which is a biocide, or that the wood preservative is a non-biocide, in particular the biocide is IPBC (3-iodo-2-propynyl butyl carbamate), propiconazole, tebuconazole or cypermethrin, and the non-biocide is tall oil or tall oil pitch.

14. Use according to any of Claims 12 or 13, **characterized in that** the active substance is a fire retardant, which is a salt of formic acid, citric acid, phosphoric acid, phosphonic acid or boric acid.

15. Use according to any of Claims 12-14, **characterized in that** the aqueous dispersion of AKD is mixed into the protective product at such a mixture ratio that the AKD content of the obtained mixture is 1-3 % by weight, preferably 1.5-2.5 % by weight, more preferably approximately 2 % by weight.
